# EUROPÄISCHE PATENTSCHRIFT

(11) **EP 2 184 817 B1**
(45) Veröffentlichungstag und Bekanntmachung des Hinweises auf die Patenterteilung: **30.11.2016**
(21) Anmeldenummer: 09013013.9
(22) Anmeldetag: 15.10.2009
(51) Int. Cl.: H01R 13/717, G03B 21/00, G09F 13/04, G09F 19/18, H01R 24/78, H01R 103/00, G08B 7/06

(54) **Elektrisches Installationsgerät**
Device for electrical installation
Dispositif faisant partie d'une installation électrique

(30) Priorität: 07.11.2008 DE 102008056409
(43) Veröffentlichungstag der Anmeldung: 12.05.2010
(73) Patentinhaber: ABB AG, 68309 Mannheim (DE)
(72) Erfinder: Dörstel, Bernhard, 50321 Brühl (DE); Wieske, Stefan, 58285 Gevelsberg (DE); Zapp, Robert, 58579 Schalksmühle (DE); Schallenberg, Wolfgang, 40599 Düsseldorf (DE)

(56) Entgegenhaltungen:
- EP-A- 1 962 391
- WO-A-2008/098406
- DE-B3-102007 001 850
- DE-B3-102007 018 177
- GB-A- 2 255 242
- US-A- 5 253 000
- US-A- 5 517 264
- US-B1- 7 438 446

## Beschreibung

Die Erfindung betrifft ein elektrisches Installationsgerät, wie Steckdose, Schalter oder Taster, mit einem Anschlussklemmenblock für den Anschluss eines 230-V-Wechselspannungsnetzes und mit einer als Orientierungsbeleuchtung dienenden und durch eine Lichtaustrittsöffnung des Gerätegehäuses leuchtenden Lichtquelle, wobei mittels einer Maske die Form eines zu projizierenden Lichtsymbols - vorzugsweise ein Richtungspfeil - vorgebbar ist.

Aus der WO 2008/098406 A ist eine Notbeleuchtung inklusive eines direkten Lichtstrahlers / Laserstrahlers (Beamers) bekannt, mit welcher unter Einsatz einer Maske ein die Ausgangsrichtung respektive den Fluchtweg anzeigender Richtungspfeil beispielsweise auf den Fußboden eines Raumes projiziert werden kann, wobei der Lichtstrahl auch Rauch durchdringt.

Aus der US 5 517 264 A ist ein Nachtlicht inklusive eines Bildprojektors bekannt, mit dem unter Einsatz einer Lichtquelle, einer Maske und optischen Sammellinsen ein Bild auf die Decke oder auf eine Wand eines Raumes projiziert werden kann.

Aus der DE 10 2007 008 626 A1 ist ein Installationsgerät, wie Steckdose, Schalter oder Taster, bekannt, mit einem Anschlussklemmenblock für den Anschluss mindestens einer Netzleitung und mit einem Leuchtmittel als integrierte Not- oder Orientierungsbeleuchtung. Die Speisung des Leuchtmittels nach einem Stromausfall erfolgt über eine Batterie oder einen Akkumulator. Vorteilhaft wird auch nach einem Stromausfall eine diffuse Beleuchtung erzeugt, welche eine Orientierung innerhalb eines Raumes ermöglicht. Gerade bei Ausfall der normalen Beleuchtung infolge eines Stromausfalls ist die erzeugte diffuse Not- oder Orientierungsbeleuchtung zum Auffinden eines Weges oder zur Vermeidung von Panik sehr wertvoll.

Aus der DE 10 2007 018 177 B3 ist eine Steckdose mit Orientierungsbeleuchtung bekannt,
- mit einer einen Steckdosentopf aufweisenden Zentralscheibe, deren Frontseite einen zugeordneten Abdeckrahmen um ein vorgegebenes Maß überragt und welche eine seitliche Lichtaustrittsöffnung aufweist,
- mit einem mit der Zentralscheibe verbundenen Gerätesockel, an welchem ein separates, an dessen Bodenseite angeordnetes Leuchtmittelmodul montiert ist, welches in seinem Innenraum mindestens eine Leuchtdiode mit zugeordneter Lichtaustrittsöffnung sowie Energieversorgungsmittel für die Speisung dieses Leuchtmittels aufweist,
- und mit einem Lichtleiter, dessen Lichteintrittsfläche über der Lichtaustrittsöffnung des Leuchtmittelmoduls angeordnet ist und dessen Lichtaustrittsfläche in die seitliche Lichtaustrittsöffnung greift.

Vorteilhaft wird der Weg zur Steckdose bzw. der Weg zu einem in der Nähe der Steckdose befindlichen Objekt - wie beispielsweise eine Tür - erhellt, wodurch z. B. auf dem Fußboden legende Gegenstände erkannt werden können und die Stolpergefahr gebannt wird.

Aus der DE 10 2007 001 850 B3 ist ein Installationsschalter oder -taster mit Gerätesockel, Wippe und Beleuchtung bekannt, wobei ein Lichtleiter an der Rückseite der Wippe angeordnet ist und wobei im Gerätesockel ein Lampenhalter mit einer Lampe angeordnet ist, deren Licht in eine Lichteintrittsfläche des Lichtleiters strahlt. Die Wippe weist an ihrer bei montiertem Installationsschalter oder -taster vorzugsweise in Richtung Fußboden weisenden Seitenkanten eine Lichtaustrittsöffnung auf, welche eine Lichtaustrittsfläche des Lichtleiters aufnimmt, so dass der unterhalb des montierten Installationsschalters oder -tasters befindliche Fußboden erhellt wird. Vorteilhaft kann einerseits die genaue Lage des Schalters selbst auch aus größerer Entfernung erkannt werden, andererseits wird zusätzlich der Weg zum Schalter erhellt.

Der Erfindung liegt die Aufgabe zugrunde, ein verbessertes elektrisches Installationsgerät der eingangs genannten Art anzugeben.

Diese Aufgabe wird in Verbindung mit den Merkmalen des Oberbegriffes erfindungsgemäß dadurch gelöst, dass die Lichtquelle über eine Sammellinse, die Maske und eine Projektionslinse durch die Lichtaustrittsöffnung strahlt, und das Gerätegehäuse mit mehreren parallel angeordneten Einschubschlitzen zum Einführen der Maske versehen ist, wodurch sich je nach gewähltem Einschubschlitz ein unterschiedlicher Abstand zwischen Maske und Projektionslinse mit Lichtaustrittsöffnung ergibt und hierdurch eine Anpassung an den Projektionsabstand zwischen der Lichtaustrittsöffnung und der Projektionsfläche erfolgt.

Die mit der Erfindung erzielbaren Vorteile bestehen nicht nur darin, dass das vorgeschlagene Installationsgerät die Funktion eines Wegweisers leistet, indem mittels eines projizierten Richtungspfeils der kürzeste Weg zu einem Notausgang signalisiert werden kann, was beispielsweise bei Hotels und öffentlichen Einrichtungen von großer Bedeutung und Wichtigkeit ist, sondern dass eine Anpassung an den Abstand zwischen dem elektrischen Installationsgerät und dem Fußboden / der Decke / der gegenüberliegenden Wand erfolgt, was dazu verhilft, das Lichtsymbol mit möglichst scharfer Kontur zu projizieren. Dabei ist es einerseits möglich, diese zusätzliche Information bereits während des Normalbetriebes zu projizieren, es ist anderseits jedoch auch möglich, eine derartige Information lediglich bei einem Notfall zu projizieren, insbesondere bei einem Stromausfall.

Vorteilhafte Weiterbildungen der Erfindung sind in den Unteransprüchen gekennzeichnet.

Die Erfindung wird nachstehend an Hand der in der Zeichnung dargestellten Ausführungsbeispiele erläutert. Es zeigen:
- Fig. 1: ein elektrisches Installationsgerät mit seitlicher Lichtaustrittsöffnung,
- Fig. 2: eine Prinzipskizze zur elektrischen / mechanischen Ausbildung des elektrischen Installationsgerätes,
- Fig. 3, 4: zwei unterschiedliche Ausgestaltungsmöglichkeiten der Lichtaustrittsöffnung,
- Fig. 5, 6: elektrische Installationsgeräte mit Einschubschlitz / Einschubschlitzen für eine Maske,
- Fig. 7, 8: zwei Beispiele zur Anwendung des elektrischen Installationsgerätes.

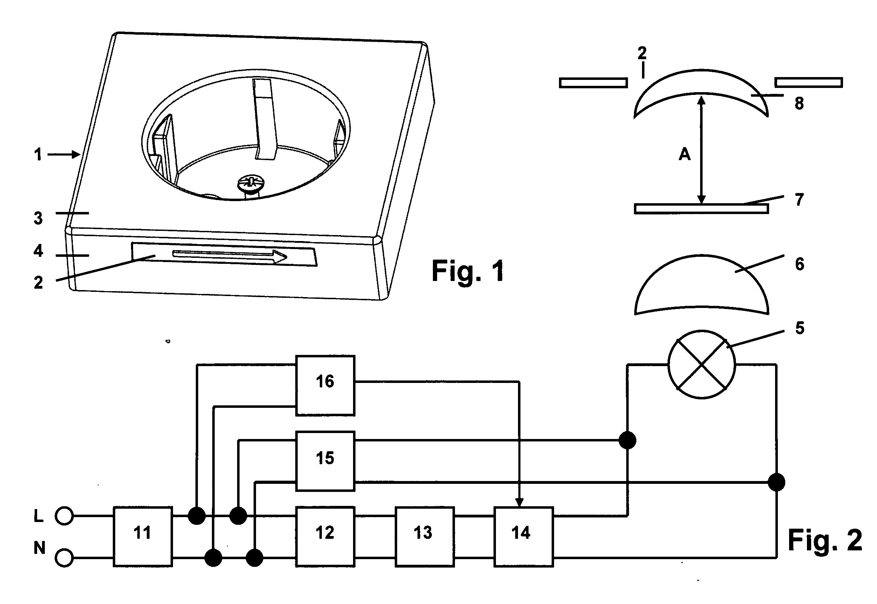

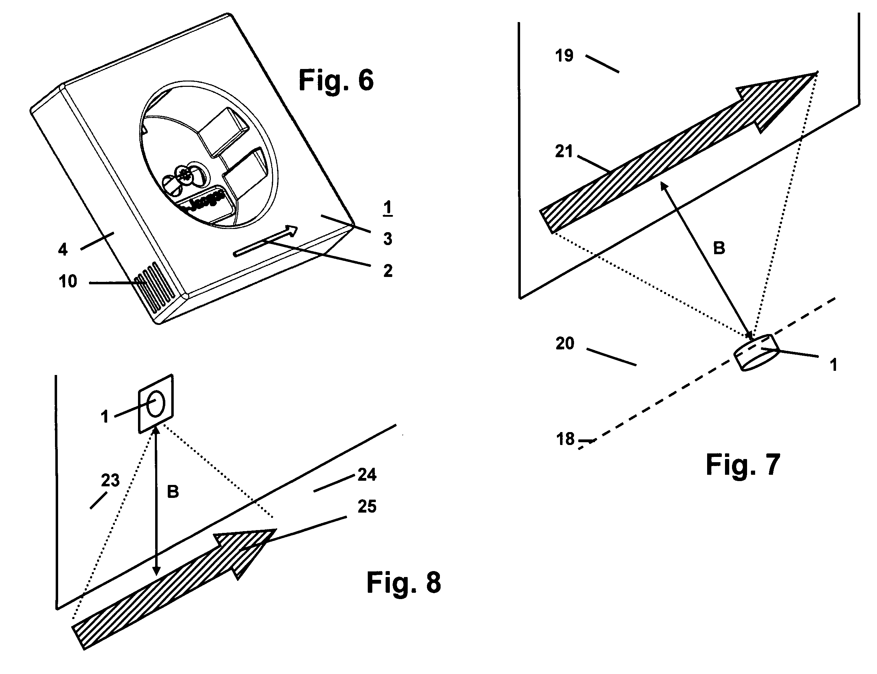

In Fig. 1 ist ein elektrisches Installationsgerät mit seitlicher Lichtaustrittsöffnung dargestellt. Es ist ein elektrisches Installationsgerät 1 zu erkennen, welches im Ausführungsbeispiel eine Unterputz-Steckdose ist, jedoch kann es sich alternativ auch um einen Schalter oder Taster handeln. Der Steckdoseneinsatz mit in der Frontseite 3 integriertem Steckdosentopf besitzt eine Lichtaustrittsöffnung 2 im Gerätegehäuse, welche beim dargestellten Beispiel in einer Seitenkante 4 angeordnet ist. Nach Montage des Installationsgerätes 1 in einer handelsübliche UP-Gerätedose in einer Wand weist die Lichtaustrittsöffnung 2 zum Fußboden (oder alternativ bei um 180° gedrehter Montage zur Decke) - siehe auch Beispiel gemäß Fig. 8. Die Seitenkante 4 ist Teil eines die Frontseite 4 umschließenden und rechtwinklig hierzu angeordneten, vorzugsweise angeformten Rahmens.

In Fig. 2 ist eine Prinzipskizze zur elektrischen / mechanischen Ausbildung des vorgeschlagenen elektrischen Installationsgerätes dargestellt. Es ist eine Lichtquelle 5, vorzugsweise eine LED, zu erkennen, deren Licht über eine Sammellinse 6 und eine Maske 7 in eine Projektionslinse 8 einstrahlt. Der Abstand A zwischen der Maske 7 und der Projektionslinse 8 kann gemäß einer Ausführungsform der Erfindung veränderlich sein - siehe hierzu auch Fig. 6. Das über die Projektionslinse 8 und durch eine Lichtaustrittsöffnung 2 des Gerätegehäuses abgestrahlte Licht trifft auf eine Wand (siehe Fig. 7) oder auf einen Fußboden oder eine Decke (siehe Fig. 8), wobei diese Wand respektive dieser Fußboden oder die Decke als Projektionsfläche für ein mit der Maske 7 vorgegebenes Lichtsymbol - insbesondere einen Richtungspfeil mit einer in eine gewünschte Richtung weisenden Pfeilspitze - dient. Selbstverständlich ist es z. B. möglich, die Sammellinse und die Projektionslinse nicht in Form von Einzellinsen, sondern in Form einer Lichtleiter-Konfiguration zu realisieren, welche entweder einen Spalt zur Einführung der Maske 7 aufweist oder in welcher auch die Maske 7 integriert ist.

In der Grundausführung erfolgt die Speisung der Lichtquelle 5 über ein Netzversorgungsteil 15 und einen Anschlussklemmenblock 11 aus einem 230-V-Wechselspannungsnetz (mit L-Leiter und N-Leiter).

Bei einer im Vergleich zur Grundausführung erweiterten Ausführungsform ist zusätzlich eine Wartungsschaltung 12 eingangsseitig mit dem Anschlussklemmenblock 11 verbunden und speist ausgangsseitig einen Akkumulator 13. Die Anschlussklemmen des Akkumulators 13 sind über ein Schaltelement 14 mit der Lichtquelle 5 verbunden. Bei Normalbetrieb - d. h. bei intaktem 230-V-Wechselspannungsnetz - befindet sich das Schaltelement 14 im AUS-Zustand. Eine ebenfalls mit dem Anschlussklemmenblock 11 verbundene Auswerteeinheit 16 überwacht den Zustand des 230-V-Wechselspannungsnetzes und steuert das Schaltelement 14 in den EIN-Zustand, sobald ein Stromausfall respektive eine Störung des Wechselspannungsnetzes auftritt. Bei ausgefallenem Wechselspannungsnetz wird die Lichtquelle 5 demnach aus dem Akkumulator 13 gespeist. Selbstverständlich ist auch eine Ausführungsvariante realisierbar, bei welcher die Lichtquelle 5 ununterbrochen, d. h. bei ungestörtem / gestörtem Wechselspannungsnetz betrieben wird, z. B. über eine Reihenschaltung Anschlussklemmenblock 11 - Wartungsschaltung 12 - Akkumulator 13 - Lichtquelle 5.

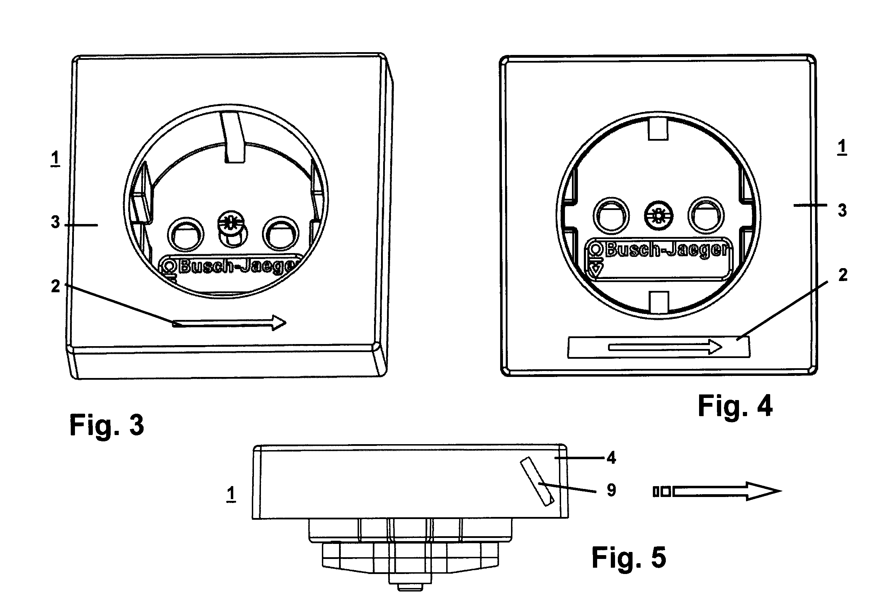

In den Figuren 3, 4 sind zwei unterschiedliche Ausgestaltungsmöglichkeiten der Lichtaustrittsöffnung dargestellt. Bei der Ausführungsform gemäß Fig. 3 ist die in der Frontseite 3 im Gerätegehäuse angeordnete Lichtaustrittsöffnung 2 in Form eines Richtungspfeils ausgebildet. Nach Montage des Installationsgerätes 1 in einer Wand weist die Lichtaustrittsöffnung 2 zur gegenüberliegenden Wand - siehe auch Beispiel gemäß Fig. 7. Es sind zwei verschiedene Ausführungsformen des elektrischen Installationsgerätes 1 mit einer nach rechts und einer nach links weisenden Pfeilspitze erforderlich. Bei der Ausführungsform gemäß Fig. 4 ist die Lichtaustrittsöffnung 2 rechteckförmig ausgebildet. Der Vorteil dieser Ausführungsform besteht darin, dass ein und dieselbe einen Richtungspfeil als Lichtsymbol aufweisende Maske 7 wahlweise mit der Pfeilspitze nach rechts oder nach links weisend verwendet werden kann.

In den Figuren 5 und 6 sind elektrische Installationsgeräte mit Einschubschlitzen für eine Maske dargestellt. Wie aus Fig. 5 zu erkennen ist, ist ein Einschubschlitz 9 in einer Seitenkante 4 im Gerätegehäuse des elektrischen Installationsgerätes 1 vorgesehen. Die Projektionsrichtung des Lichtsymbols in Richtung Fußboden oder Decke ist mit einem Pfeil gekennzeichnet.

Bei der in Fig. 6 gezeigten Ausführungsform sind mehrere Einschubschlitze 10 parallel übereinander liegend in einer Seitenkante 4 des Gerätegehäuses des elektrischen Installationsgerätes 1 vorgesehen. Der Vorteil dieser Ausführungsform besteht darin, dass sich je nach gewähltem Einschubschlitz 10 ein unterschiedlicher Abstand A - siehe auch Fig. 2 - zwischen Maske 7 und Projektionslinse 8 mit Lichtaustrittsöffnung 2 ergibt. Hierdurch erfolgt eine Anpassung an den Projektionsabstand B - siehe die Figuren 7 und 8 - d. h. den Abstand zwischen der Lichtaustrittsöffnung des elektrischen Installationsgerätes und der Projektionsfläche, d. h. Fußboden / Decke oder gegenüberliegende Wand. Dies verhilft dazu, das Lichtsymbol mit möglichst scharfer Kontur zu projizieren.

Dabei sind die Einschubschlitze 10 bei der Ausführungsform gemäß Fig. 6 parallel zur Frontseite 3 angeordnet, da beim dargestellten Ausführungsbeispiel die Projektionsrichtung senkrecht zur von der Frontseite 3 gebildeten Fläche verläuft. Abweichend hiervon wären die Einschubschlitze 10 bei einer Ausführungsform mit Lichtaustrittsöffnung 2 in der Seitenkante 4 des Gerätegehäuses senkrecht zur Frontseite 3 angeordnet.

In den Fig. 7 bzw. 8 sind zwei Beispiele zur Anwendung des elektrischen Installationsgerätes dargestellt, wobei eine Wand bzw. der Fußboden als Projektionsfläche für das Lichtsymbol dienen. Beim Anwendungsbeispiel gemäß Fig. 7 ist das Installationsgerät 1 in einer ersten Wand 18 montiert und projiziert ein Lichtsymbol 21 an eine zweite Wand 19 (= Projektionsfläche), gegenüberliegend zur ersten Wand 18. Es ist ein in den Figuren 3, 4, 6 dargestelltes Installationsgerät 1 mit Lichtaustrittsöffnung 2 in der Frontseite 3 des Gerätegehäuses geeignet. Zwischen beiden Wänden 18, 19 befindet sich ein Flur 20.

Beim Anwendungsbeispiel gemäß Fig. 8 ist das Installationsgerät 1 in einer Wand 23 montiert und projiziert ein Lichtsymbol 25 auf den unterhalb der Wand 23 befindlichen Fußboden 24 (= Projektionsfläche). Es ist ein in den Figuren 1 und 5 dargestelltes Installationsgerät 1 mit Lichtaustrittsöffnung 2 in der Seitenkante 4 des Gerätegehäuses geeignet. Selbstverständlich kann bei um 180° gedreht montiertem Installationsgerät das Lichtsymbol an die Decke projiziert werden.

### Bezugszeichenliste

- 1: elektrisches Installationsgerät (Steckdose, Schalter, Taster)
- 2: Lichtaustrittsöffnung im Gerätegehäuse
- 3: Frontseite
- 4: Seitenkante
- 5: Lichtquelle
- 6: Sammellinse
- 7: Maske
- 8: Projektionslinse
- 9: Einschubschlitz
- 10: Einschubschlitze
- 11: Anschlussklemmenblock
- 12: Wartungsschaltung
- 13: Akkumulator
- 14: Schaltelement
- 15: Netzversorgungsteil
- 16: Auswerteeinheit
- 17: ---
- 18: erste Wand
- 19: zweite Wand als Projektionsfläche
- 20: Flur
- 21: Lichtsymbol
- 22: ---
- 23: Wand
- 24: Fußboden als Projektionsfläche
- 25: Lichtsymbol

- A: Abstand zwischen Maske und Projektionslinse
- B: Projektionsabstand zur Projektionsfläche

## Patentansprüche

1. Elektrisches Installationsgerät (1), mit einem Anschlussklemmenblock (11) für den Anschluss eines 230-V-Wechselspannungsnetzes und mit einer als Orientierungsbeleuchtung dienenden und durch eine Lichtaustrittsöffnung (2) des Gerätegehäuses leuchtenden Lichtquelle (5), wobei mittels einer Maske (7) die Form eines zu projizierenden Lichtsymbols (21, 25) - vorzugsweise ein Richtungspfeil - vorgebbar ist, **dadurch gekennzeichnet, dass** die Lichtquelle (5) über eine Sammellinse (6), die Maske (7) und eine Projektionslinse (8) durch die Lichtaustrittsöffnung (2) strahlt und dass das Gerätegehäuse mit mehreren parallel angeordneten Einschubschlitzen (10) zum Einführen der Maske (7) versehen ist.

2. Installationsgerät nach Anspruch 1, **dadurch gekennzeichnet, dass** sich die Lichtaustrittsöffnung (2) in der Frontseite (3) des Gerätegehäuses befindet.

3. Installationsgerät nach Anspruch 1, **dadurch gekennzeichnet, dass** sich die Lichtaustrittsöffnung (2) in einer zur Frontseite (3) des Gerätegehäuses senkrecht angeordneten Seitenkante (4) befindet.

4. Installationsgerät nach einem der vorstehenden Ansprüche **dadurch gekennzeichnet, dass** ein Netzversorgungssteil (15) zur Speisung der Lichtquelle (5) aus dem Wechselspannungsnetz vorgesehen ist.

5. Installationsgerät nach einem der vorstehenden Ansprüche **dadurch gekennzeichnet, dass** ein Akkumulator (13) zur Speisung der Lichtquelle (5) vorgesehen ist, wobei die Aufladung des Akkumulator (3) über eine Wartungsschaltung (12) aus dem Wechselspannungsnetz erfolgt.

6. Installationsgerät nach Anspruch 5, **dadurch gekennzeichnet, dass** eine Überwachung des Wechselspannungsnetzes mittels einer Auswerteeinheit (16) erfolgt, welche ein zwischen Akkumulator (13) und Lichtquelle (5) gefügtes Schaltelement (14) ansteuert.

## Claims

1. Electrical installation device (1) comprising a connection terminal block (11) for the connection of a 230-V AC voltage mains and comprising a light source (5), which serves as orientation illumination and is luminous through a light exit opening (2) of the device housing, wherein the shape of a light symbol (21, 25) to be projected - preferably a direction arrow - is predefinable by means of a mask (7),
**characterized in that** the light source (5) radiates through the light exit opening (2) via a converging lens (6), the mask (7) and a projection lens (8), and **in that** the device housing is provided with a plurality of insert slots (10) arranged parallel and serving for introducing the mask (7).

2. Installation device according to Claim 1, **characterized in that** the light exit opening (2) is situated in the front side (3) of the device housing.

3. Installation device according to Claim 1, **characterized in that** the light exit opening (2) is situated in a side edge (4) arranged perpendicularly to the front side (3) of the device housing.

4. Installation device according to any of the preceding claims, **characterized in that** a mains supply part (15) is provided for feeding the light source (5) from the AC voltage mains.

5. Installation device according to any of the preceding claims, **characterized in that** a rechargeable battery (13) is provided for feeding the light source (5), wherein the rechargeable battery (3) is charged from the AC voltage means via a maintenance circuit (12).

6. Installation device according to Claim 5, **characterized in that** the AC voltage mains is monitored by means of an evaluation unit (16), which drives a switching element (14) inserted between rechargeable battery (13) and light source (5).

## Revendications

1. Appareil d'installation électrique (1), comportant un bornier (11) destiné au raccordement d'un réseau à tension alternative à 230 V et comportant une source lumineuse (5) utilisée en tant qu'éclairage d'orientation et éclairant le boîtier d'appareil à travers une ouverture de sortie de lumière (2), dans lequel la forme d'un symbole lumineux (21, 25) - de préférence, une flèche de direction - devant être projeté peut être prédéfinie au moyen d'un masque (7), **caractérisé en ce que** la source lumineuse (5) émet par l'intermédiaire d'une lentille collectrice (6), du masque (7) et d'une lentille de projection (8) à travers l'ouverture de sortie de lumière (2) et **en ce que** le boîtier d'appareil est muni d'une pluralité de fentes d'insertion (10) disposées parallèlement pour introduire le masque (7).

2. Appareil d'installation selon la revendication 1, **caractérisé en ce que** l'ouverture de sortie de lumière (2) se trouve sur la face avant (3) du boîtier d'appareil.

3. Appareil d'installation selon la revendication 1, **caractérisé en ce que** l'ouverture de sortie de lumière (2) se trouve dans un bord latéral (4) disposé perpendiculairement à la face avant (3) du boîtier d'appareil.

4. Appareil d'installation selon l'une quelconque des revendications précédentes, **caractérisé en ce qu'**une partie d'alimentation secteur (15) est prévue pour alimenter la source lumineuse (5) à partir du réseau à tension alternative.

5. Appareil d'installation selon l'une quelconque des revendications précédentes, **caractérisé en ce qu'**il est prévu un accumulateur (13) destiné à alimenter la source lumineuse (5), dans lequel l'accumulateur (3) est chargé par l'intermédiaire d'un circuit de maintenance (12) à partir du réseau de tension alternative.

6. Appareil d'installation selon la revendication 5, **caractérisé en ce qu'**une surveillance du réseau à tension alternative est effectuée au moyen d'une unité d'évaluation (16) qui commande un élément de commutation (14) interposé entre l'accumulateur (13) et la source lumineuse (5).
